# EUROPEAN PATENT APPLICATION

(11) **EP 2 005 816 A1**
(43) Date of publication of application: **24.12.2008**
(21) Application number: 08010880.6
(22) Date of filing: 16.06.2008
(51) Int. Cl.: A01G 9/14

(54) **Installation provided with a plurality of plant containers supported on rails**

(30) Priority: 20.06.2007 NL 1034007
(71) Applicant: Janssen, Wilhelmus Henricus Johannes, 6049 AJ HERTEN (NL)
(72) Inventor: Janssen, Wilhelmus Henricus Johannes, 6049 AJ HERTEN (NL)
(74) Representative: Vollebregt, Cornelis Jacobus

(57) **Abstract**

The invention relates to an installation provided with a plurality of plant containers supported on rails, which are arranged one behind another, seen in the longitudinal direction of the rails, and which can be moved in the longitudinal direction of the rails by moving mechanisms being movable back and forth in a direction parallel to the rails. Both the plant containers and the moving mechanisms are provided with guide means that co-operate with a rail supporting the plant containers.

## Description

The invention relates to an installation provided with a plurality of plant containers supported on rails, which are arranged one behind another, seen in the longitudinal direction of the rails, and which can be moved in the longitudinal direction of the rails by moving mechanisms being movable back and forth in a direction parallel to the rails.

In practice a large number (in some cases hundreds) of plant containers are generally arranged one behind another on the rails, with the moving mechanisms moving the plant containers over the rails in steps. In view of the large number of containers to be moved simultaneously, a powerful drive mechanism is required, whilst furthermore an adequate guidance of the plant containers must be provided.

Such an installation is known from US patent No. 5,355,621, in which the plant containers are supported on rails extending parallel to each other.

The moving mechanisms are provided between the rails and are guided on four further rails, which are disposed between rails that support the plant containers. All this leads to a complex and heavy construction.

An installation of this kind is known from Dutch patent application No. 7708142, in which the installation comprises endless chains or cables provided spaced from and parallel to the rails that support the plant containers, to which chains or cables carriers for moving the plant containers are attached. Such a construction is not suitable for simultaneously moving large amounts of plant containers. Furthermore there is a danger that the upper parts of the chains or cables will deflect downwards when the carriers are subjected to a load, as a result of which the carriers will move under the plant containers without carrying them along.

The object of the invention is to provide an installation of the above kind which is of simple and efficient design.

According to the invention this object can be accomplished in that both the plant containers and the moving mechanisms are provided with guide means that co-operate with a rail that supports the plant containers.

By using one and the same rail for guiding the plant containers and the moving mechanisms, a simple and effective construction of the installation can be realised.

Preferably, the moving mechanism is driven by a drive means extending under the rail, which also contributes towards realising a simple construction and an advantageous manner of driving the moving mechanisms.

By providing the moving mechanism with two pawls arranged on either side of the rail, which engage at least one plant container for moving said plant container, a very advantageous transmission of forces from the drive mechanism to the plant container is obtained whilst preventing undesirable frictional forces on the guide rail and/or the moving mechanism.

The invention will be explained in more detail hereinafter with reference to an embodiment of an installation according to the invention as schematically shown in the appended figures.
Figure 1 is a top plan view of an installation according to the invention.
Figure 2 is a larger-scale side view of the installation shown in figure 1.
Figure 3 is a side view of a trolley supporting a plant container.
Figure 4 is a top plan view of figure 3.
Figure 5 is a sectional view of figure 3, along the line V-V in figure 3.
Figure 6 is a view corresponding to figure 3, in combination with a part of the moving mechanism.
Figure 7 is a cross-sectional view of figure 6.
Figure 8 is a side view of mechanisms for moving plant containers from the rails and placing the plant containers onto the rails.

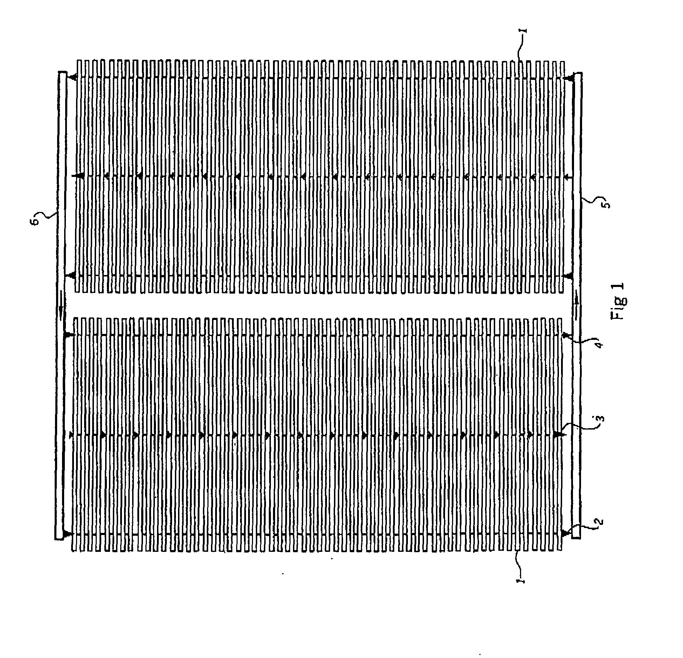

The installation shown in figure 1 comprises two rows of a large number of elongated plant containers 1 arranged one behind another and parallel to each other. In the embodiment shown in the figure, the plant containers 1 arranged in a row are supported by three rails 2-4 extending perpendicularly to the longitudinal direction of the plant containers.

Conveying elements 5 and 6, preferably in the form of endless conveyor belts, are disposed at the two ends of the two rows of plant containers.

As is usual with installations of this kind, the plant containers 1 can for example be moved downwards from the top in the left-hand row, seen in figure 1, as indicated by arrows, whilst the plant containers 1 in the other, right-hand row are moved in the opposite direction, i.e. upwards from the bottom in figure 1, as is also indicated by arrows in figure 1.

Furthermore, a plant container from the left-hand row, seen in figure 1, can be placed on the conveyor belt 5 and be moved to the right, seen in figure 1, by the conveyor belt 5 and subsequently be placed in the right-hand row of plant containers in figure 1. In a similar manner a plant container from the right-hand row, seen in figure 1, can be placed on the conveyor belt 6 and subsequently be moved to the left, seen in figure 1, by means of the conveyor belt 6. From said conveyor belt 6, the plant container in question can in turn be transferred to the left-hand row, seen in figure 1.

Several such installations are usually disposed in a greenhouse for raising plants. The plants, which are contained in a plant container present on the conveyor belt 5 and/or the conveyor belt 6, may be subjected to required operations, for example picking flowers or the like.

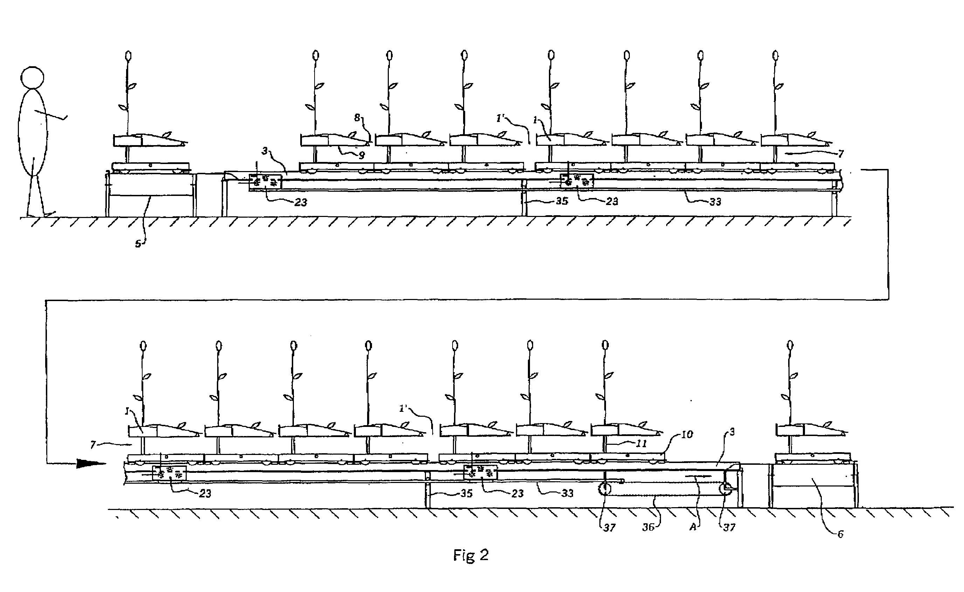

Each plant container 1 is supported on the rails 2-4 by trolleys 7 which can be moved over the rails (figure 2). As furthermore appears from figure 2, a strip 8 extending parallel to the plant container is connected to each plant container 1 by means of arms 9 extending between the strip 8 in question and the plant container. As is schematically shown in figure 2, such a strip functions to support any overhanging plant branches.

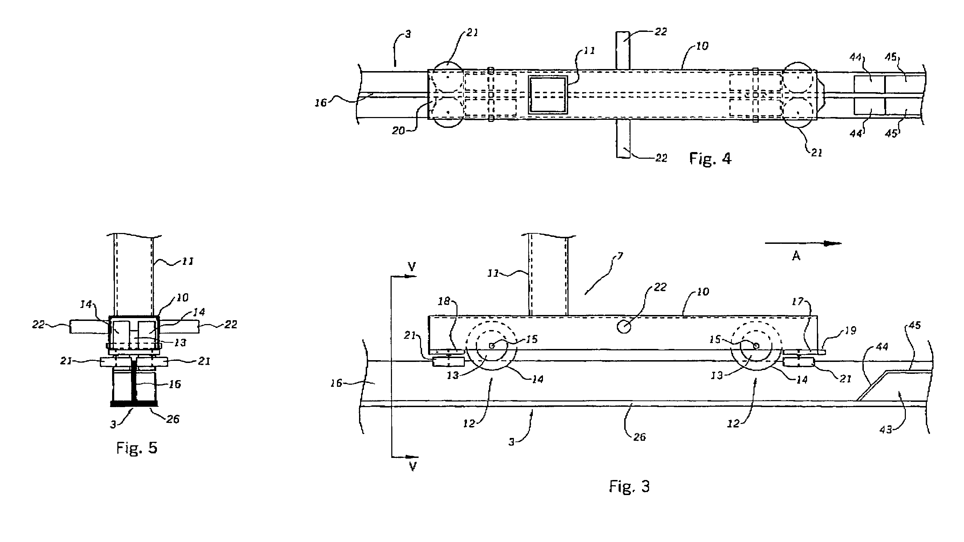

As is shown in more detail in figures 3-5, each trolley 7 comprises a horizontal beam 10 of inverted U-shape (in sectional view) and a vertical beam 11 fixed thereto, to the upper end of which the plant container 1 is attached.

Wheel sets 12 are provided between the legs of the U-shaped beam 10, at a short distance from the two ends of said beam 10. Each wheel set 12 is made up of a centrally disposed metal wheel 13, which is preferably formed by a ball bearing, and auxiliary wheels 14 of plastic material, which are disposed on either side of the wheel 13. As will be apparent in particular from figure 3, the auxiliary wheels 14 made of plastic material have a larger external diameter than the central wheel 13. The wheels 14 made of plastic material are freely rotatable about an axle 15 extending perpendicularly to the longitudinal direction of the beam 10, which axle is supported by the beam 10.

As will furthermore be apparent from figure 3, the centrally disposed wheels 3 are supported on the upper edge of the upright flange 16 of the rails 2, 3, 4 having an inverted T-shape (in sectional view).

The ends of the parallel legs of the U-shaped beam 10 are connected by means of respective connecting plates 17 and 18, which are fixed to the beam 10. The connecting plate 17 is provided with a projecting nose 19, whilst the connecting plate 18 is provided with a recess 20 adapted to conform to the shape of the nose 19. When a few trolleys 7 supporting the plant containers 1 are placed in abutment with each other, the noses 19 of the trolleys 7 supporting a plant container 1 will engage in the recesses 20 of the trolleys 17 supporting the adjacent plant container, so that the various trolleys abutting each other and the plant containers supported by said trolleys will form a properly linked-together group, thus preventing the plant containers from moving out of alignment with the rails ( upon being transported over the rails).

As is furthermore shown in figures 3-5, two guide wheels 21 being rotatable about vertical axes of rotation are provided near each end of the beam 10, between which guide wheels the upper end of the vertical flange 16 of a rail that supports the plant container extends. It will be apparent that said wheels 21 provide an adequate guidance of the trolley 7 in question along the respective rail 2, 3 or 4.

In figures 3-5, horizontally extending, co-axial carrier means in the form of pins 22 are furthermore provided on the sides of the beam 10, near the centre of the beam, whose function will be described in more detail yet hereinafter.

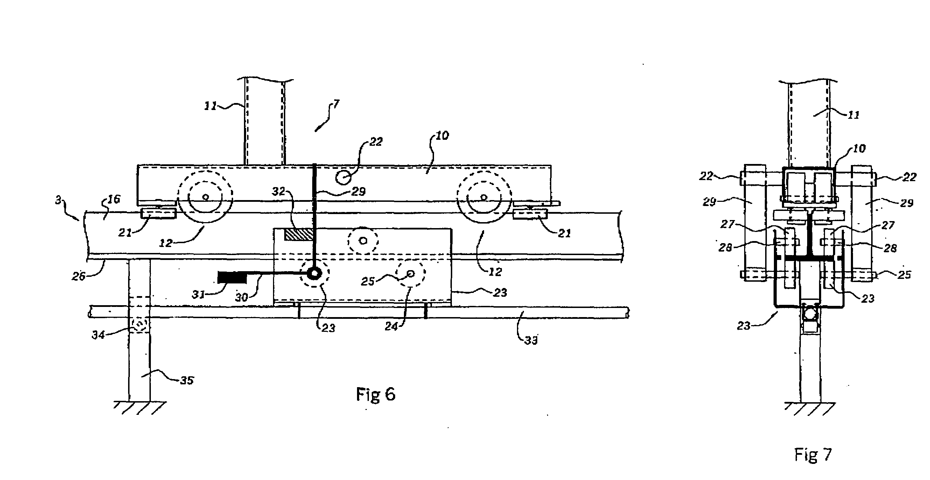

In addition to the above-described trolley 7, figure 6 shows another trolley 23 supported on the rail 3, which will be referred to below as "pawl trolley". The pawl trolley 23 has a U-shaped section, with guide wheels being disposed between the parallel legs of the U-shaped pawl trolley 23, in this case two spaced-apart sets of two guide wheels 23 and 23, respectively, which are rotatable about horizontal axles 25 extending perpendicularly to the longitudinal direction of the rail 3 that supports the pawl trolley 23, and which engage the bottom side of the horizontal flange 26 of the rail in question. Another set of two wheels 27 is likewise supported by the pawl trolley 23 via horizontal axles 28, the wheels 27 being disposed to engage the upper side of the horizontal flange 26 of the rail 3 in question.

Pawls 29 can pivot freely about the ends of the axle 25 that supports the wheels 23, which ends project from the pawl trolley 23 on either side thereof. Near the axle 25, an arm 30 which extends transversely to the pawl 29 and which can pivot along with said pawl 29 is connected to each pawl 29, whilst a weight 31 is attached to the free end of the arm 30. It will be apparent that the pawl tends to pivot in anti-clockwise direction, seen in figure 6, under the influence of the weight 31, but such pivoting movement is bounded by a stop 32 shown in figure 6, which is attached to the pawl trolley 23.

Instead of the arm 30 and the weight 31, a spring might be provided, for example, for urging the pawl 29 in the direction of said stop.

A number of such evenly spaced-apart pawl trolleys 23 are supported on the central guide rail 3. The pawl trolleys 23 are fixedly connected to a rod 33 extending in the longitudinal direction of the rail 3, which rod is positioned directly below the centre of the rail 3, as will be apparent in particular from figure 7. The rod 33 is supported and guided by rollers 34, which are mounted in supports 35 that support the rail 3.

One end of the rod 33 is connected to an endless chain 36 (figure 2), which is passed over two spaced-apart chain wheels 37 disposed under the rail 3, perpendicularly thereto, which chain wheels are rotatable about horizontal axes of rotation extending perpendicularly to the longitudinal direction of the rail 3. One of said chain wheels can be driven by means of a reversible electric motor or the like, in such a manner that the upper part of the chain to which the end of the rod 33 is connected in this embodiment can be driven back and forth in horizontal direction.

A pawl trolley 23 will be provided for each group of, for example, four or more plant containers 1 arranged one behind another. When the upper part of the chain 36, and thus the rod 33, is driven in the direction indicated by the arrow A (figure 2), the pawls 29 of each pawl trolley 23 will strike against the carrier pins 22 connected to the rearmost trolley 7, seen in the intended direction of movement indicated by the arrow A, of the group of plant containers 1 to be moved by the pawl trolley 23 in question.

As a result of the placement of the moving mechanism for the plant containers 1, which inter alia comprises the pawl trolley 23, the rod 33 and the drive chain 36, largely below and symmetrically relative to the rail, and the above-described guidance of the trolleys 7 supporting the plant containers and the pawl trolleys 23 on one and the same rail 3, an adequate guidance of the trolleys 7 and the pawl trolleys 23 is ensured, whilst the occurrence of forces leading to disadvantageous torsion is prevented as a result of the symmetric arrangement of the pawls 29 transmitting the forces relative to the rail 3 and the position of the rod 33 and the drive chain 36 centrally below and parallel to the rail 3.

During the movement of the plant containers on the rails 2-4 by means of the moving mechanism connected to the central rail 3, the rod 33 is loaded in tension, so that a comparatively thin rod will suffice.

Upon movement of the upper part of the chain 36, and thus of the rod 33, in a direction opposite to the direction indicated by the arrow A, the pawls 29 that come into contact with pins 22 connected to the trolley 7 will be pivoted in anti-clockwise direction, seen in figure 2, so that the moving mechanism can be returned to a position ready for a next stepwise movement of the plant containers 1.

It has furthermore become apparent in practice that comparatively little force is needed for moving the plant containers as a result of the fact that the plant containers 1 are supported on the metal rails 2-4 via the metal wheels 13.

A suitable selection of the spacing between successive pawl trolleys 23 makes it possible to effect an arrangement some distance apart of successive groups of plant containers, each carried along by a pawl trolley 23, so that an opening 1' (figure 2) will be present between the successive groups, which may be advantageous for ventilation purposes.

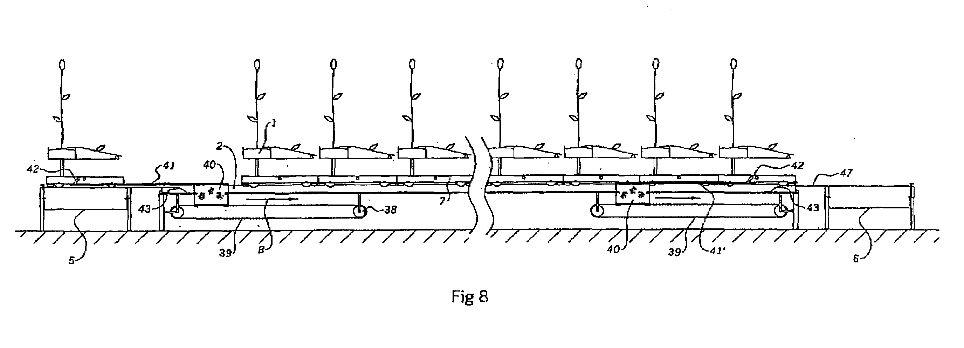

Figure 8 shows the mechanisms for transferring a plant container 1 from a conveyor belt to the rails or from the rails to a conveyor belt.

Figure 8 shows an embodiment in which a plant container 1 is transferred from the conveyor belt 5 to the rails 2-4, whilst a plant container 1 is transferred from the rails 2-4 to the conveyor belt 6. In the case of the movement of the plant containers 1 shown in figure 1, said arrangement will be provided near the right-hand (seen in figure 1) row of plant containers 1 arranged one behind another. In this case a plant container 1 is thus moved from the conveyor belt 5 onto the rails 2-4, whilst another plant container is moved from the rails 2-4 onto the conveyor belt 6.

A chain 39, which is passed over chain wheels 38 and which extends parallel to a respective rail 2, 4, is provided both below the end of the rail 2 that is located near the conveyor belt 5 and below the end of the rail 4 that is located near the conveyor belt 5. As will be apparent from figure 8, the chain wheels 38 are rotatable about horizontal axes of rotation extending perpendicularly to the longitudinal direction of the rails. Connected to the upper part of the chain 39 is a trolley 40, which corresponds to the pawl trolley 23 as regards its construction and which is guided on the horizontal flange of the respective rail 2 or 4 of inverted T-shaped section by means of wheels in a similar manner as the pawl trolley 23. The trolley 40 is not provided with the pawls 29, however.

An arm 41 extending in the direction of the conveyor belt 5 is connected to the trolley 40, to the free end of which arm two pivotable pawls 42 disposed beside each other are connected. Said pawls are capable of pivoting movement, in such a manner that upon movement of the upper part of the chain 39, and thus of the trolley 40, the arm 41 and the pawls 42, in the direction indicated by the arrow B (figure 8), the pawls 42 will engage the carrier pins 22 connected to the respective trolleys 7 supporting the plant container 1 on the rails 2 and 4, so that the trolleys 7 supporting the plant container 1 will be moved from the conveyor belt 5 onto the rails 2-4. Upon movement of the moving mechanism, which comprises the chain 39 and the trolley 40, the arm 41 and the pawls 42, in a direction opposite the direction indicated by the arrow B, which is realised by reversing the direction of rotation of the motor that drives the chain 39, the pawls can pivot in clockwise direction, seen in figure 8, relative to the arm 41.

A similar drive mechanism as used for pulling a plant container from the conveyor belt 5 onto the rails is used under the ends facing towards the conveyor belt 6 of the two outer rails 2 and 4 for pushing a plant container 1 off the rails 2-4. Accordingly, like parts are provided with the same numerals. In this case, however, the arm 41' connected to the trolley 40 extends from the trolley 40 in the direction of the conveyor belt 6.

The pawls 42, which are connected to the end of the arm 41' extending in the direction of the conveyor belt 6, will engage the carrier pins 22 again, which carrier pins are connected to trolleys 7 supporting the plant container 1 in question, which roll on the rails 2 and 4.

An advantageous transmission of forces to a plant container 1 is ensured by engaging the outermost trolleys 7 supporting the respective plant container 1 upon movement of the plant containers from or onto a conveyor belt.

As is apparent in particular from figure 3, bridging elements 43 are provided on the ends of the rails 2-4 located near the conveyor belts on either side of the upright flange 16 of said rails, which bridging elements are made up of a part 44 which slopes upwards from the lower flange 26 of the rail in the direction of the adjacent conveyor belt and which blends near its upper end into a horizontally extending part 45 extending in the direction of the nearby conveyor belt 5 or 6, which part 45 is flush with the upper surface of the respective conveyor belt 5 or 6 and which joins a bridge part 47 (figure 8) which bridges the distance between the bridging element 43 and the conveyor belt 6 in question. Upon transfer of the trolleys 7 supporting the plant container 1 from the rails 2-4 to a nearby conveyor belt 5 or 6, the auxiliary wheels 14 will run against the upwardly sloping part 44 of the bridging element 43, and subsequently move further over the part 45 of the bridging element and the bridging element 47, rolling onto the nearby conveyor belt and supporting the plant container 1 in question on the conveyor belt 6 via the wheels 14.

Surprisingly it has been found that the auxiliary wheels 14 of plastic material, which are freely rotatable about the axles 15, encounter sufficient friction upon rolling onto a respective conveyor belt, so that the trolleys 7 supporting the plant container will come to a standstill on the respective conveyor belt, without special stop means or the like being required for preventing the trolleys 7 from rolling too far onto the conveyor belt.

Since the rails 2-4 generally have a great length, they are usually subdivided into sections, whose facing ends are spaced apart so as to accommodate any changes in the length of the sections caused by temperature changes.

With the installation according to the invention, a plate bridging the gap between the facing ends of two successive sections of the rails 2-4 is attached to one end of a section at the facing ends of said sections. Said bridging plate is mounted in such a manner that the auxiliary wheels 14 will roll on the bridging plate when a trolley 7 passes the gap, so that the wheel 13 can cross the gap without impediment.

It stands to reason that variants of the embodiment as described in the foregoing are possible within the spirit and scope of the invention. Thus, setting cylinders may for example be provided below and parallel to the respective rails for driving the rod 33 and/or the trolleys 40.

Furthermore it is possible to use an I section instead of a section in the form of an inverted T.

## Claims

1. An installation provided with a plurality of plant containers supported on rails, which are arranged one behind another, seen in the longitudinal direction of the rails, and which can be moved in the longitudinal direction of the rails by moving mechanisms being movable back and forth in a direction parallel to the rails, **characterised in that** both the plant containers and the moving mechanisms are provided with guide means that co-operate with a rail supporting the plant containers.

2. An installation according to claim 1, **characterised in that** the moving mechanism is driven by a drive means extending under the rails.

3. An installation according to claim 1 or 2, **characterised in that** the moving mechanism is provided with two pawls arranged on either side of the rail, which engage at least one plant container for moving said plant container.

4. An installation according to any one of the preceding claims, **characterised in that** a moving mechanism comprises at least one trolley supported on a rail via wheels, to which pawls for engaging a plant container are connected.

5. An installation according to claim 4, **characterised in that** the trolleys which are movable along a rail are fixed to a rod extending below the rail in question, in the longitudinal direction of said rail, which rod is connected at one end thereof to a drive means disposed below the rail in question.

6. An installation according to claim 5, **characterised in that** said drive means is made up of a chain disposed below the rail, which chain is passed over chain wheels whose axes of rotation extend horizontally and perpendicularly to the longitudinal direction of the rail, and which can be driven in two opposite directions.

7. An installation according to claim 5 or 6, **characterised in that** said rod is driven in such a manner that it is loaded in tension upon moving the plant containers.

8. An installation according to any one of the preceding claims, **characterised in that** trolleys supporting plant containers are provided with wheels which roll on the upper side of the rails and with wheels that engage the rails on both sides thereof.

9. An installation according to claim 8, **characterised in that** the trolleys supporting the plant containers are provided with carriers, which are engaged by pawls connected to the moving mechanism.

10. An installation according to claim 8 or 9, **characterised in that** further wheels are provided on either side of the wheels, preferably made of a metal, that roll on the upper side of the wheels, which further wheels have a larger diameter than the wheels that roll on the rails.

11. An installation according to any one of the preceding claims, **characterised in that** the interconnected trolleys for moving the plant containers are provided on a rail supporting the plant containers near the centre thereof.

12. An installation according to any one of the preceding claims, **characterised in that** conveying elements extending transversely to the plant containers are provided near the opposing ends of the rails that support the plant containers, and **in that** the rails located near the ends of the plant containers, which support said plant containers, support moving mechanisms near their ends to enable the transfer of a plant container from the rails to a conveying element and from a conveying element to the rails, respectively.

13. An installation according to claim 12, **characterised in that** said moving mechanisms comprise trolleys which can move over said rails, which trolleys are provided with arms extending in the direction of the nearby conveying element, to the ends of which arms pawls are connected for engaging the carriers connected to the trolleys that support the plant containers.

14. An installation according to either one of the preceding claims 12 or 13, **characterised in that** bridging elements are provided at the ends of the rails that face towards the conveying elements, in such a manner that wheels having a larger diameter than the wheels that support the trolleys supporting the plant containers on the rails roll over said bridging elements and onto the conveying element.

15. An installation according to any one of the preceding claims, **characterised in that** pawls arranged beside each other, which, in use, engage a trolley supporting a plant container, can pivot independently of each other.

16. An installation according to any one of the preceding claims, **characterised in that** said rails are made up of sections whose facing ends are spaced apart, with a bridging element extending to below the end of the adjacent section being connected to the end of a section, in such a manner that wheels having a larger diameter than wheels which support trolleys that carry plant containers on the rails roll over said bridging element.

17. An installation according to any one of the preceding claims, **characterised in that** a rail has an inverted T-shaped or I-shaped section.
